# EUROPEAN PATENT APPLICATION

(11) **EP 4 656 363 A1**
(43) Date of publication of application: **03.12.2025**
(21) Application number: 24767280.1
(22) Date of filing: 18.01.2024
(51) Int. Cl.: B29C 73/16, B29L 31/34

(54) **REPAIR KIT FOR ELECTRONIC DEVICE**

(30) Priority: 07.03.2023 KR 20230030021; 28.03.2023 KR 20230040802
(71) Applicant: Samsung Electronics Co., Ltd., Suwon-si, Gyeonggi-do 16677 (KR)
(72) Inventor: SEO, Dongwoo, Suwon-si, Gyeonggi-do 16677 (KR)
(74) Representative: Nederlandsch Octrooibureau
(86) International application number: PCT/KR2024/000917
(87) International publication number: WO 2024/185991

(57) **Abstract**

According to one embodiment of the present disclosure, a repair kit for an electronic device may comprise: a nozzle; a storage part configured to store a sealing material in a liquid state or a gel state and to discharge the sealing material through the nozzle based on an external force; and a guide tube detachably provided on the nozzle while at least partially accommodating the nozzle and configured to align the nozzle in a designated position or in a designated direction. In one embodiment, when the guide tube is mounted on the nozzle, a tip of the nozzle, through which the sealing material is discharged, may be configured to protrude into one end of the guide tube. Various other embodiments may be possible.

## Description

### [Technical Field]

One or more embodiments of the disclosure relate to a repair kit for an electronic device and, in particular, a repair kit configured to accommodate, discharge, inject, or apply a repair material, for example, in a liquid state or gel state.

### [Background Art]

As electronic, information and communication technologies have developed, various functions have come to be integrated into a single electronic device. For example, a smartphone may include functions of a sound playback device, an imaging device, or a digital diary, in addition to a communication function, and more diverse functions may be implemented in a smartphone through installation of additional applications. An electronic device may be provided with various pieces of information in real time by accessing a server or another electronic device in a wired or wireless manner as well as by executing an installed application or a stored file.

As the carrying and use of miniaturized electronic devices such as smartphones has become commonplace, the demand for repairs due to breakdown or damage is increasing. For example, a display may be damaged by external impact or the appearance of the electronic device (e.g., a housing) may be deformed, and the lifespan of various components may reach its limit. When some components are damaged or reach the end of their lifespan, replacing the damaged components rather than purchasing a new electronic device may be more economical for the user.

When a crack occurs in an externally exposed component such as a display or a housing due to an external impact, a waterproof/dustproof structure may be damaged. In an electronic device, a display may be the component most frequently damaged or broken due to an external impact. For example, the display may be one of the components that may be repaired by the user. Although it may vary depending on the user's usage habits, a battery may be an example of a component that is repaired by the user when its service life reaches its limit. For example, a battery may be one of the components that may be repaired (or replaced). In addition, repairable components may include, for example, plate-shaped components that are visible on the exterior of an electronic device, mechanically operated keys, and/or sound components such as a speaker or a microphone.

Recently, various components of electronic devices have been supplied to the market by manufacturers, users, or components recyclers. For example, users have increasingly been able to repair damaged electronic devices more easily by purchasing individual components of the electronic devices and replacing them themselves. Since replacing damaged components is more economical than purchasing a new electronic device, the supply of individual components and repair tools for electronic devices is expected to expand.

The above-described information may be provided as related art for the purpose of helping to understand the disclosure. No claim or determination is made regarding whether any of the foregoing may be applied as prior art with respect to the disclosure.

### [Detailed Description of the Invention]

### [Technical Solution]

According to an embodiment of the disclosure, a repair kit for an electronic device may include a nozzle, a storage configured to store a sealing material in a liquid state or a gel state and to discharge the sealing material through the nozzle based on an external force, and a guide tube detachably provided on the nozzle while accommodating at least a portion of the nozzle, the guide tube being configured to align the nozzle to a predetermined position or in a predetermined direction. In an embodiment, when the guide tube is mounted to the nozzle, a tip of the nozzle, from which the sealing material is discharged, may be configured to protrude from one end (hereinafter referred to as a "support end") of the guide tube.

According to another embodiment of the disclosure, a repair kit for an electronic device may include a nozzle, a storage configured to store a sealing material in a liquid state or a gel state and to discharge the sealing material through the nozzle based on an external force, a guide tube detachably provided on the nozzle while accommodating at least a portion of the nozzle, the guide tube being configured to align the nozzle to a predetermined position or in a predetermined direction and to cause a tip of the nozzle, from which the sealing material is discharged, to protrude from one end (hereinafter referred to as a "support end") of the guide tube, and at least one vent recess formed at least partially on an outer surface of the support end. In an embodiment, the support end may have an outer diameter smaller than that of the remaining portion of the guide tube.

### [Brief Description of Drawings]

The above-described aspects or other aspects, configurations, and/or advantages regarding an embodiment of the disclosure may become more apparent through the following detailed description made with reference to the accompanying drawings.
FIG. 1 is a first perspective view illustrating a repair kit according to an embodiment of the disclosure.
FIG. 2 is a second perspective view illustrating the repair kit of FIG. 1, according to an embodiment of the disclosure.
FIG. 3 is an exploded perspective view illustrating an electronic device to be repaired using the repair kit of FIG. 1 according to an embodiment of the disclosure.
FIG. 4 is a perspective view illustrating the electronic device of FIG. 3.
FIG. 5 is a perspective view illustrating a state in which the electronic device is being repaired using the repair kit of FIG. 1 according to an embodiment of the disclosure.
FIG. 6 is a perspective view illustrating a state in which the repair kit of FIG. 1 is being coupled to the electronic device according to an embodiment of the disclosure.
FIG. 7 is a perspective view illustrating a state in which the repair kit of FIG. 1 is coupled to an electronic device according to an embodiment of the disclosure.
FIG. 8 is a cross-sectional view of the repair kit of FIG. 7 taken along line C1, according to an embodiment of the disclosure.
FIG. 9 is an enlarged view of portion E1 of FIG. 8.
FIG. 10 is a view illustrating a state in which the repair kit of FIG. 7 discharges the sealing material according to an embodiment of the disclosure, in which portion E1 of FIG. 8 is illustrated in an enlarged view.
FIG. 11 is a view illustrating a state in which the guide tube is coupled to the nozzle in the repair kit of FIG. 1, according to an embodiment of the disclosure.
FIG. 12 is a perspective view illustrating the guide tube in the repair kit of FIG. 1, according to an embodiment of the disclosure.
FIG. 13 is a view illustrating a state in which the repair kit of FIG. 12 is discharging the sealing material according to an embodiment of the disclosure.
FIG. 14 is a view illustrating the guide tube of the repair kit of FIG. 1, according to an embodiment of the disclosure.
FIG. 15 is a view illustrating the guide tube in the repair kit of FIG. 1, according to an embodiment of the disclosure.
FIG. 16 is an exploded perspective view illustrating a guide tube of a repair kit according to an embodiment of the disclosure.
FIG. 17 is a view illustrating a state in which support plates of the guide tube of FIG. 16 are being coupled to support pieces according to an embodiment of the disclosure, in which portion E2 of FIG. 16 is illustrated in an enlarged view.
FIG. 18 is a view illustrating a state in which support plates of the guide tube of FIG. 16 are coupled to support pieces according to an embodiment of the disclosure, in which portion E2 of FIG. 16 is illustrated in an enlarged view.
FIG. 19 is a view illustrating in another direction a state in which support plates of the guide tube of FIG. 16 are being coupled to support pieces according to an embodiment of the disclosure, in which portion E2 of FIG. 16 is illustrated in an enlarged view.
FIG. 20 is a perspective view illustrating a state in which a repair kit including the guide tube of FIG. 16 is being coupled to an electronic device, according to an embodiment of the disclosure.
FIG. 21 is a perspective view illustrating a state in which the repair kit including the guide tube of FIG. 16 is coupled to the electronic device, according to an embodiment of the disclosure.
FIG. 22 is a view illustrating a state in which a guide tube of a repair kit according to an embodiment of the disclosure is unfolded.
FIG. 23 is a perspective view illustrating a state in which engaging pieces of the guide tube of FIG. 22 are engaging with engaging holes according to an embodiment of the disclosure.
FIG. 24 is a view illustrating a state in which a variable plate of the guide tube of FIG. 22 is bent, according to an embodiment of the disclosure.
FIG. 25 illustrates views obtained when the guide tube of FIG. 22 is viewed in three directions, according to an embodiment of the disclosure.
FIG. 26 is a perspective view illustrating a state in which a repair kit is coupled to an electronic device through the guide tube of FIG. 22, according to an embodiment of the disclosure.

Throughout the appended drawings, like reference numerals may be assigned to like components, configurations, and/or structures.

### [Mode for Carrying out the Invention]

An electronic device with guaranteed waterproof/dustproof performance may be capable of operating stably even in harsh usage environments. For example, even if temporarily submerged in water, the internal space of the electronic device may remain substantially uncontaminated with moisture. Accordingly, waterproof/dustproof structures are becoming increasingly common in electronic devices that are carried and used on a daily basis. However, it may be difficult for users to repair (e.g., self-repair) or replace (e.g., self-replace) components such as a display while maintaining the waterproof/dustproof structure mounted in the electronic device. For example, in the manufacturing process, a waterproof/dustproof structure in the form of a closed loop along the periphery of a display may be implemented using a jig and dispensing equipment, but this structure may be damaged when the display is removed for repair (e.g., self-repair) or replacement (e.g., self-replacement). Although user and societal demand for repair is steadily increasing, the performance of the waterproof/dustproof structure may be degraded after the repair or replacement.

An embodiment of the disclosure is intended to at least address the above-described problems and/or disadvantages and to provide at least the advantages described below. For example, a repair kit may be provided that allows a user to restore a waterproof/dustproof structure during repair of an electronic device.

An embodiment of the disclosure may provide a repair kit that facilitates positioning and/or alignment of a storage (or storage container) when discharging a sealing material for restoring a waterproof/dustproof structure.

The technical issues to be addressed by the disclosure are not limited to those described above, and other technical issues may be clearly understood by a person ordinarily skilled in the related art to which the disclosure pertains.

The following description with reference to the appended drawings may provide an understanding of various exemplary implementations of the disclosure, including the claims and their equivalents. An exemplary embodiment disclosed in the following description includes various specific details to help understanding, but is considered to be one of various exemplary embodiments. Accordingly, it will be understood by a person ordinarily skilled in the art that various implementations described herein may be variously changed and modified without departing from the scope and spirit of the disclosure. In addition, descriptions of well-known functions and configurations may be omitted for clarity and brevity.

The terms and words used in the following description and claims are not limited to a bibliographical meaning, but may be used to describe an embodiment of the disclosure clearly and consistently. Accordingly, it will be apparent to those skilled in the art that the following description of various implementations of the disclosure is provided for explanatory purposes and not intended to limit the scope of the disclosure and equivalents thereof.

Unless the context clearly indicates otherwise, the singular forms of "a," "an," and "the" should be understood to include the plural meaning. Accordingly, for example, the term "a component surface" may be understood to include one or more surfaces of the component.

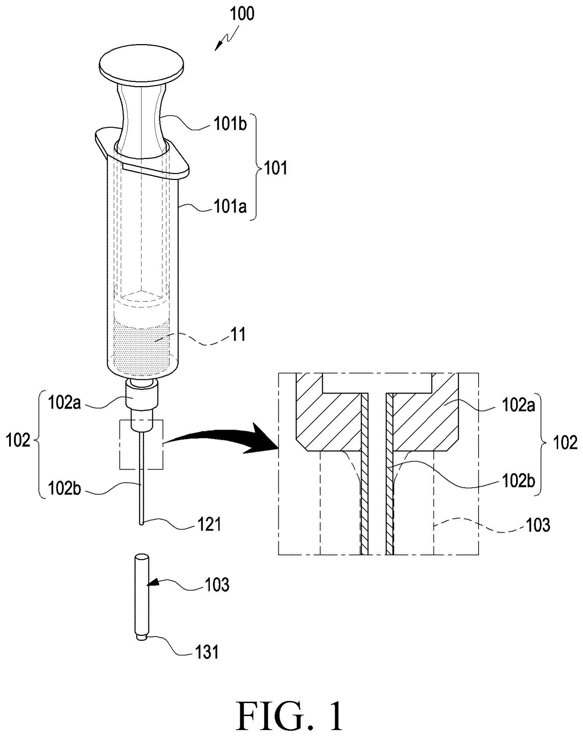

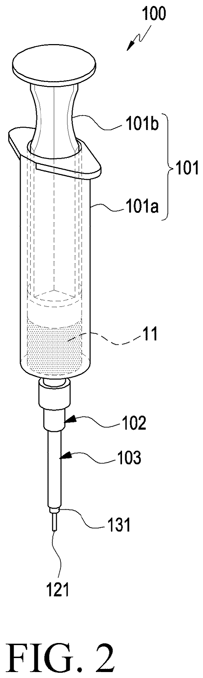

FIG. 1 is a first perspective view illustrating a repair kit according to an embodiment of the disclosure. FIG. 2 is a second perspective view illustrating the repair kit of FIG. 1, according to an embodiment of the disclosure.

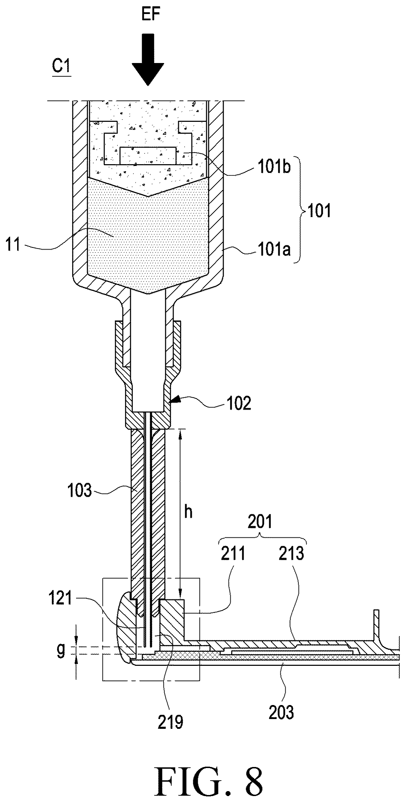

Referring to FIGS. 1 and 2, a repair kit 100 may be one of tools configured to store or discharge a sealing material 11 for implementing a waterproof/dustproof structure. For example, the repair kit 100 may include a storage 101 configured to store the sealing material 11 in a liquid or gel state, a nozzle 102 disposed on the storage 101, and/or a guide tube 103 detachably provided on the nozzle 102 while accommodating at least a portion of the nozzle 102. The storage 101 may discharge the stored sealing material 11 through the nozzle based on an external force (e.g., an external force EF of FIG. 8). The nozzle 102 may include, for example, a needle stopper 102a and a needle 102b. The needle stopper 102a may couple the needle 102b to the storage 101, and the needle 102b may discharge the sealing material 11 in a state of being disposed at a position predetermined by a user. The guide tube 103 may guide or align the nozzle 102 (e.g., the needle 102b) in terms of height or inclination direction when disposing the nozzle 102 at a predetermined position.

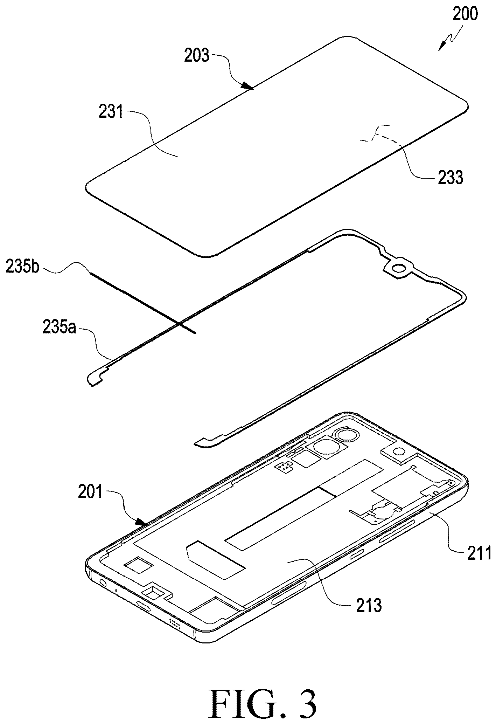

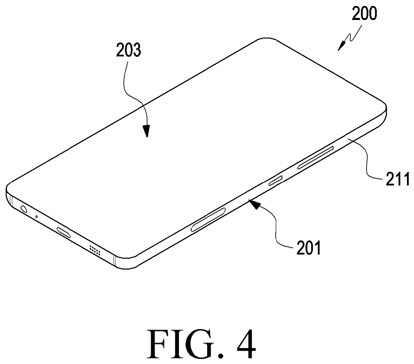

According to an embodiment, the sealing material 11 is a material for forming a waterproof/dustproof structure and may be in a liquid or gel state at room temperature. After a predetermined period of time passes from the time of discharge (or after being exposed to heat or ultraviolet light), the sealing material 11 may be cured and maintain a defined shape. For example, by injecting the sealing material 11 into a confined space where it is difficult to form a waterproof/dustproof structure in a general assembly process, the waterproof/dustproof structure may be completed. When a discontinuous section is present in an adhesive or attachment area between a display (e.g., the display 203 of FIG. 3 or FIG. 4) and a housing (e.g., the housing 201 of FIG. 3 or FIG. 4) of an electronic device (e.g., the electronic device 200 of FIG. 3 or FIG. 4) described below, a waterproof/dustproof structure may be implemented in the discontinuous section of the adhesive or attachment area by injecting the sealing material 11 into a predetermined position. A structure or component formed by injecting and curing such a sealing material 11 may be referred to as a (cured-in-place gasket ("CIPG")).

According to an embodiment, the storage 101 may include a storage container 101a configured to provide at least a portion of a space in which the sealing material 11 is accommodated, and a plunger 101b at least partially accommodated in the storage container 101a. For example, the sealing material 11 may be discharged by the plunger 101b linearly moving within the storage container 101a by an external force. According to an embodiment, the storage container 101a may have a cylindrical shape with one open end, and the plunger 101b may be accommodated in the storage container 101a through the open end of the storage container 101a. In an embodiment, the nozzle 102 may be coupled to the other end of the storage container 101a and may guide a direction or position where the sealing material 11 is discharged. For example, the other end of the storage container 101a may be open and may have an inner diameter smaller than that of the one end of the storage container 101a.

As will be described later, the guide tube 103 may accommodate at least a portion of the nozzle 102 and may be coupled or engaged with the electronic device 200 during a repair process to guide an alignment position or alignment direction of the nozzle 102. For example, the nozzle 102 (e.g., the needle 102b) may have a very small outer diameter (e.g., within about 2 mm), and in the operation of discharging the sealing material 11, it may be difficult for a user to align or maintain the position or orientation of the nozzle 102. The guide tube 103 may be substantially coupled to enclose an outer circumferential surface of the nozzle 102 and may have a size (e.g., an outer diameter) that allows it to be directly coupled or fixed to the electronic device 200. The structure of the guide tube 103 will be described in more detail with reference to FIGS. 8 to 13.

FIG. 3 is an exploded perspective view illustrating an electronic device to be repaired using the repair kit of FIG. 1 according to an embodiment of the disclosure. FIG. 4 is a perspective view illustrating the electronic device of FIG. 3.

Referring to FIGS. 3 and 4, the electronic device 200 may include a housing 201 and a display 203. Although not illustrated, the electronic device 200 may further include a printed circuit board, a battery, a second support member, and/or a rear surface plate. Some of the mentioned components may be omitted or unmentioned components (e.g., an antenna module) may additionally be included. However, the repair kit according to one or more embodiments of the disclosure (e.g., the repair kit 100 of FIG. 1 or FIG. 2) is substantially intended to discharge or inject a waterproof/dustproof material (e.g., the sealing material 11 of FIG. 1 or FIG. 2) between the housing 201 and the display 203. Therefore, for the sake of simplicity of description, detailed descriptions of the unillustrated components of the electronic device 200 will be omitted.

According to an embodiment, the housing 201 may provide a mounting structure for a component such as the display 203 and may provide at least a portion of the external appearance of the electronic device 200. For example, the housing 201 may include a side surface member 211 that is at least partially exposed in the external appearance of the electronic device 200. The side surface member 211 may have, for example, a frame shape of a closed-loop structure and may be arranged to substantially surround the periphery of the display 203 when viewed from the front of the electronic device 200 or the housing 201. In an embodiment, the periphery of the display 203 may partially extend in a curved shape. In a portion where the periphery of the display 203 partially extends in a curved shape, a portion of the side surface member 211 may be visually concealed even when viewed from the front of the electronic device 200.

According to an embodiment, the electronic device 200 and/or the housing 201 may further include a first support member 213. The first support member 213 may be a structure that supports the rear surface of the display 203 and may protect the display 203 from other components such as a printed circuit board or a battery in the internal space of the electronic device 200 and/or the housing 201. For example, the first support member 213 may serve as a structure that substantially separates or isolates the space in which the display 203 is disposed from the space in which one or more other components are disposed inside the electronic device 200. In an embodiment, the first support member 213 may provide a plurality of openings to provide a wiring area for electrically connecting the display 203 and the other components.

According to an embodiment, the display 203 may be disposed on the front surface of the electronic device 200 and/or the housing 201. For example, since the user uses the electronic device 200 while viewing visual information output through the display 203, the surface on which the display 203 is disposed may be understood as the front surface of the electronic device 200 and/or the housing 201. In an embodiment, the display 203 may include a window plate 231 and a display panel 233. The window plate 231 may be a substantially transparent plate made of glass or synthetic resin. The display panel 233 may be one of output devices that outputs visual information and may be disposed on an inner surface of the window plate 231. In an embodiment, the display 203 may function as both an output device and an input device that detects user input by including a touch panel disposed between the window plate 231 and the display panel 233.

According to an embodiment, in disposing the display 203 on the front surface of the housing 201 (e.g., the side surface member 211 or the first support member 213), the electronic device 200 may include a first adhesive member 235a and/or a second adhesive member 235b. The first adhesive member 235a may have a predetermined width or thickness and may be disposed to correspond to a periphery area of the display 203. In an embodiment, the first adhesive member 235a may provide a sealing structure (e.g., a waterproof/dustproof structure) between the display 203 and the housing 201. For example, the first adhesive member 235a may be a double-sided tape or an adhesive applied to a predetermined area, and may implement a waterproof/dustproof structure by being attached to both the housing 201 and the display 203.

According to an embodiment, the second adhesive member 235b may attach an edge of the display 203 to the housing 201 in an area where the first adhesive member 235a is not disposed. In an embodiment, the second adhesive member 235b may not substantially provide an adhesive function but may provide a waterproof/dustproof structure at least in part between the display 203 and the housing 201 when the display 203 is attached to the housing 201 by the first adhesive member 235a. For example, the second adhesive member 235b may be an elastic member in the form of a line or wire and may implement a waterproof/dustproof structure while being compressed between the display 203 and the housing 201. In an embodiment, the second adhesive member 235b may be simultaneously bonded to the display 203 and the housing 201 to ensure that the waterproof/dustproof structure in the area where the second adhesive member 235b is provided is more stable. The second adhesive member 235b may be a double-sided tape or an adhesive applied to a predetermined area, and may implement a waterproof/dustproof structure by being attached to both the housing 201 and the display 203.

According to an embodiment, when the first adhesive member 235a and the second adhesive member 235b form a closed-loop shape, a stable waterproof/dustproof structure may be implemented between the display 203 and the housing 201. The electronic device 200 may include components or structures exposed to the external space, such as a key input device (e.g., a power key), various connectors, and/or holes for sound input/output. In an environment where the electronic device 200 is miniaturized while such components or structures exposed to the external space are arranged, it may be difficult to dispose the first adhesive member 235a and the second adhesive member 235b in a closed-loop shape. In a structure where the first adhesive member 235a and the second adhesive member 235b are difficult to be disposed in a closed-loop shape, a waterproof/dustproof structure may be provided in a discontinuous section between the first adhesive member 235a and the second adhesive member 235b using a sealing material (e.g., the sealing material 11 of FIG. 1 or FIG. 2), such as a CIPG. As mentioned above, when the user repairs (e.g., self-repairs) or replaces (e.g., self-replaces) the display 203, the waterproof/dustproof structure in such a discontinuous section may be easily reproduced or restored by using the repair kit 100 according to one or more embodiments of the disclosure.

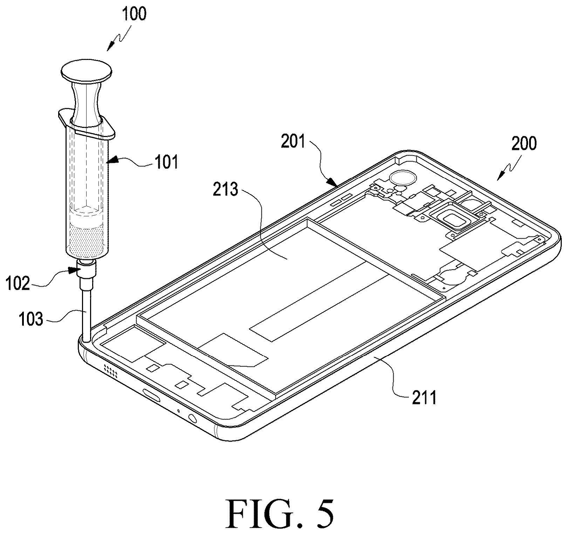

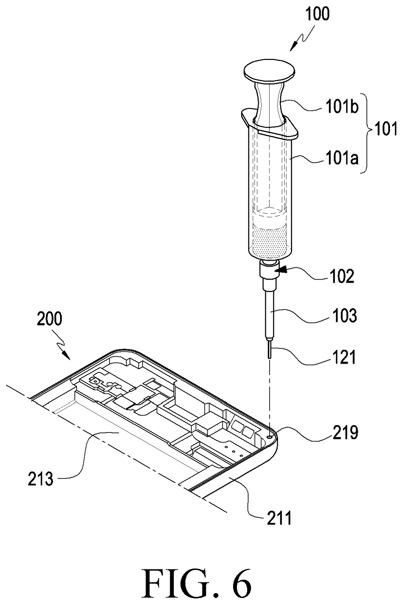

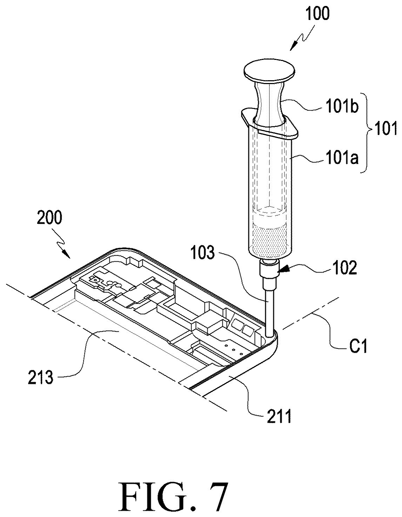

FIG. 5 is a perspective view illustrating a state in which the electronic device is being repaired using the repair kit of FIG. 1 according to an embodiment of the disclosure. FIG. 6 is a perspective view illustrating a state in which the repair kit of FIG. 1 is being coupled to the electronic device according to an embodiment of the disclosure. FIG. 7 is a perspective view illustrating a state in which the repair kit of FIG. 1 is coupled to an electronic device according to an embodiment of the disclosure.

In the following embodiment, reference numerals in the drawings may be assigned the same as or omitted as in the above-described embodiment for components that may be easily understood through the above-described electronic device 200 and/or repair kit 100, and detailed descriptions thereof may also be omitted.

Referring to FIGS. 5 to 7, in a process of repairing or replacing the display 203, the user may form a waterproof/dustproof structure in a discontinuous section between the first adhesive member 235a and the second adhesive member 235b by injecting the sealing material 11 from the rear surface of the housing 201. In an embodiment, the housing 201 (or the electronic device 200 of FIGS. 3 and 4) may further include an injection hole 219 formed through the side surface member 211 or the first support member 213. When the display 203 is disposed on the housing 201, a discontinuous section between the first adhesive member 235a and the second adhesive member 235b may be located substantially to correspond to the injection hole 219 on the front surface of the housing 201. For example, in a state in which the display 203 is disposed on the housing 201, a waterproof/dustproof structure may be formed in the discontinuous section between the first adhesive member 235a and the second adhesive member 235b by injecting the sealing material 11 from the rear surface of the housing 201. The sealing material 11 injected into the discontinuous section between the first adhesive member 235a and the second adhesive member 235b may be cured after a predetermined period of time, and/or the curing of the sealing material 11 may be promoted by heating or irradiating with ultraviolet rays depending on the user's conditions.

In an embodiment, when injecting the sealing material 11, the user may have difficulty in aligning a nozzle tip 121 having a very small outer diameter to an appropriate position on the injection hole 219. For example, when the tip 121 of the nozzle is not maintained at an appropriate position or in an appropriate direction, the sealing material 11 may not be sufficiently injected into the discontinuous section, and/or the side surface member 211 or the first support member 213 may be contaminated with the sealing material 11 outside the injection hole 219. In an embodiment, the tip 121 of the nozzle 102 may come into contact with and damage the display panel 233 when it enters excessively the interior of the injection hole 219. The guide tube 103 according to one or more embodiments of the disclosure may guide an alignment position or alignment direction when aligning the storage 101 or the nozzle 102 with the injection hole 219. For example, the alignment position and alignment direction of the storage 101 and/or the nozzle 102 may be determined by inserting or fixing a portion of the guide tube 103 (e.g., the support end 131) into the injection hole 219.

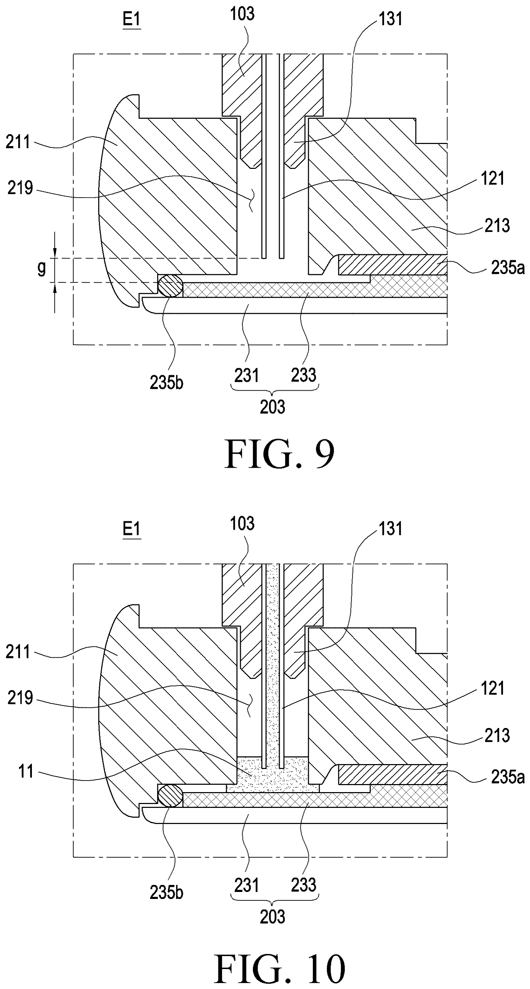

FIG. 8 is a cross-sectional view of the repair kit of FIG. 7 taken along line C1, according to an embodiment of the disclosure. FIG. 9 is an enlarged view of portion E1 of FIG. 8. FIG. 10 is a view illustrating a state in which the repair kit of FIG. 7 discharges the sealing material according to an embodiment of the disclosure, in which portion E1 of FIG. 8 is illustrated in an enlarged view.

Referring further to FIGS. 8 to 10, at least a portion (e.g., the support end 131) of the guide tube 103 may be inserted into the injection hole 219 so as to be substantially fixed to the housing 201 at a predetermined position and in a predetermined direction with respect to the housing 201 (e.g., the side surface member 211 or the first support member 213). For example, by using the guide tube 103, the user may inject the sealing material 11 into the injection hole 219 while maintaining a state in which the repair kit 100 (e.g., the storage 101 or the nozzle 102) is disposed at a predetermined location and/or in a predetermined direction on the housing 201. The description "injecting the sealing material 11 into the injection hole 219" may refer to, for example, forming a waterproof structure by injecting a CIPG material into a discontinuous section between the first adhesive member 235a and the second adhesive member 235b.

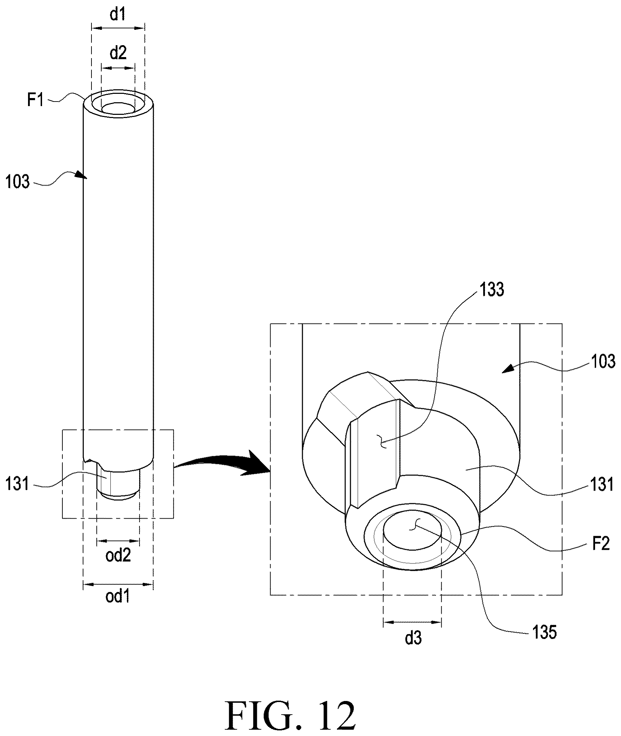

According to an embodiment, in a state in which the guide tube 103 is inserted into the injection hole 219 and the nozzle 102 is accommodated in the guide tube 103, a portion of the guide tube 103 adjacent to the support end 131 may be substantially supported by the housing 201, and an upper end of the guide tube 103 (e.g., the first end face F1 of FIG. 12) may interfere with the nozzle 102 or be disposed adjacent to the storage 101. In this state, the storage 101 and/or the nozzle 102 may no longer enter the interior of the injection hole 219. For example, the guide tube 103 may prevent the nozzle 102 or the storage 101 from further approaching the housing 201 beyond a predetermined position (e.g., the height indicated by "h"), and in this case, a predetermined gap "g" may be maintained between the tip 121 of the nozzle 102 and the display 203. The predetermined gap "g" may provide an environment in which the sealing material 11 is easily injected into the discontinuous section between the first adhesive member 235a and the second adhesive member 235b without the tip 121 of the nozzle 102 being in direct contact with the display 203.

According to an embodiment, the outer diameter of the support end 131 (e.g., the outer diameter indicated as "od2" in FIG. 12) may correspond to the inner diameter of the injection hole 219 and may be smaller than another portion of the guide tube 103 (e.g., the portion having the outer diameter indicated as "od1" in FIG. 12). For example, by inserting the support end 131 into the injection hole 219, the guide tube 103 may be aligned in a substantially perpendicular direction relative to the rear surface of the housing 201 (e.g., the first support member 213), and the guide tube 103 may be inserted into the injection hole 219 to a depth corresponding to the length of the support end 131. For example, the guide tube 103 may be coupled to the housing 201 and aligned in a predetermined direction within a range allowed by the support end 131 and the injection hole 219. In FIGS. 9 and 10, a certain gap is illustrated between the outer circumferential surface of the support end 131 and the inner circumferential surface of the injection hole 219, but in practice, when the guide tube 103 (e.g., the support end 131) is coupled to the injection hole 219, the outer circumferential surface of the support end 131 may be in close contact with the inner circumferential surface of the injection hole 219. Accordingly, the guide tube 103 may guide the storage 101 and/or the nozzle 102 to be disposed or aligned on the housing 201 at a predetermined position and/or in a predetermined direction.

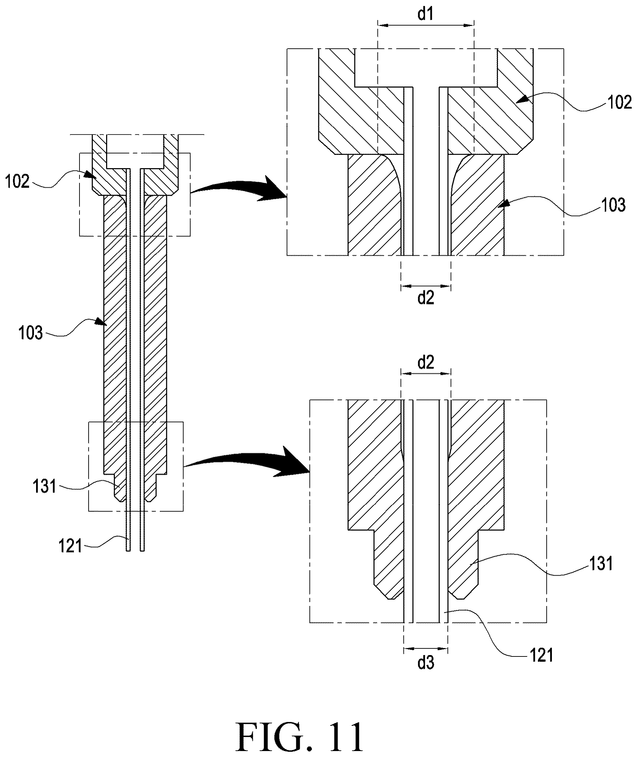

FIG. 11 is a view illustrating a state in which the guide tube is coupled to the nozzle in the repair kit of FIG. 1, according to an embodiment of the disclosure. FIG. 12 is a perspective view illustrating the guide tube in the repair kit of FIG. 1, according to an embodiment of the disclosure.

Referring further to FIGS. 11 and 12, the guide tube 103 may have a shape extending in one direction and may be coupled to substantially enclose at least a portion of the nozzle 102. In a state in which the guide tube 103 is coupled to the storage 101 and/or the nozzle 102, the tip 121 of the nozzle 102 may protrude to one end (e.g., the second end face F2) of the guide tube 103. For example, the tip 121 of the nozzle 102 may protrude from the support end 131 of the guide tube 103, and thus may be located inside the injection hole 219 together with the support end 131 when the support end 131 is coupled to the injection hole 219.

According to an embodiment, the guide tube 103 may provide a guide hole 135 that penetrates and extends from the first end face F1 to the second end face F2. The first end face F1 may refer to, for example, a surface disposed to face the storage 101 in a state in which the guide tube 103 is coupled to the nozzle 102. In an embodiment, in a state in which the guide tube 103 is coupled to the nozzle 102, the first end face F1 may come into direct contact with the nozzle 102 (or the storage 101) and may determine a position at which the guide tube 103 is stopped or fixed. In an embodiment, the second end face F2 may refer to an end face located on the support end 131 side and facing away from the first end face F1. In an embodiment, in a state in which the guide tube 103 is coupled to the nozzle, the tip 121 of the nozzle 102 may protrude beyond the second end face F2. For example, the nozzle 102 may enter the guide tube 103 (e.g., the guide hole 135) through the guide hole 135 from the first end face F1 side, and the tip 121 of the nozzle 102 may protrude from the second end face F2.

According to an embodiment, the support end 131 may have an outer diameter smaller than that of the remaining portion of the guide tube 103. For example, assuming that the guide tube 103 generally has a first outer diameter od1, the support end 131 may have a second outer diameter od2 smaller than the first outer diameter od1. In an embodiment, due to a difference in outer diameter between the support end 131 and the remaining portion of the guide tube 103, the support end 131 may be allowed to be inserted into the injection hole 219 of the housing 201, while the remaining portion of the guide tube 103 may interfere with the side surface member 211 or the first support member 213. For example, a portion of the guide tube 103 having the first outer diameter od1 may function as a structure that maintains the position or height indicated by "h" in FIG. 8.

According to an embodiment, the inner diameter of the guide hole 135 may at least partially decrease toward the second end face F2. For example, when the guide hole 135 has a first inner diameter d1 at the first end face F1, the guide hole 135 may have a third inner diameter d3 smaller than the first inner diameter d1 at the second end face F2. For example, as the guide hole 135 becomes closer to the second end face F2 from the first end face F1, the inner diameter of the guide hole 135 may gradually decrease from the first inner diameter d1 to the third inner diameter d3. In an embodiment, at least a partial section of the guide hole 135 between the first end face F1 and the second end face F2 may have a second inner diameter d2. The second inner diameter d2 may be, for example, smaller than the first inner diameter d1 and greater than the third inner diameter d3. For example, the inner diameter of the guide hole 135 may gradually or stepwise decrease in at least a portion thereof toward the second end face F2. In an embodiment, the third inner diameter d3 may substantially correspond to an outer diameter of the nozzle 102 at the tip 121 of the nozzle 102. For example, the structure related to the inner diameter of the guide hole 135 described above may provide an environment that allows the nozzle 102 to easily and/or smoothly enter the guide hole 135 when the guide tube 103 is coupled to the nozzle 102.

According to an embodiment, the repair kit 100 and/or the guide tube 103 may further include a vent recess 133. In an embodiment, the vent recess 133 may be provided in a recessed shape in at least a portion of an area that comes into direct contact with the housing 201 (e.g., the injection hole 219) when the guide tube 103 is coupled to the housing 201. For example, the outer circumferential surface of the support end 131 may be an area that substantially comes into contact with the inner circumferential surface of the injection hole 219, and the vent recess 133 may be disposed on a portion of the outer circumferential surface of the support end 131.

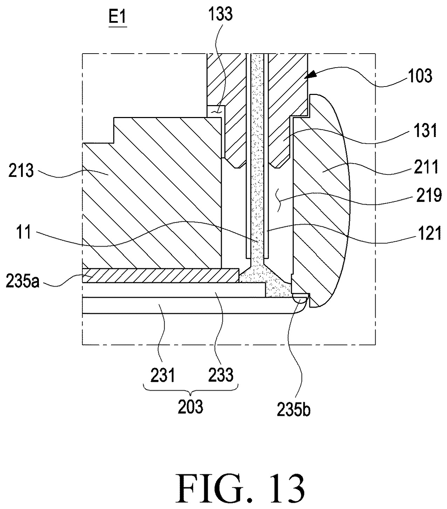

FIG. 13 is a view illustrating a state in which the repair kit of FIG. 12 is discharging the sealing material according to an embodiment of the disclosure.

Referring further to FIG. 13, in a state in which the guide tube 103 is coupled to the housing 201, the injection hole 219 may appear to be generally closed by the support end 131, but may be connected to an external space of the housing 201 through the vent recess 133. For example, when a CIPG material is discharged, air inside the injection hole 219 may be discharged to the exterior through the vent recess 133. Since the vent recess 133 is formed, the discharge of air inside the injection hole 219 may become smoother, and the discharge of the sealing material 11 or the injection of the sealing material 11 into the injection hole 219 may become easier. As a result, even when a user directly discharges the sealing material 11 from the repair kit 100 or the storage 101, the CIPG may be placed in the discontinuous area between the first adhesive member 235a and the second adhesive member 235b to restore the waterproof/dustproof structure.

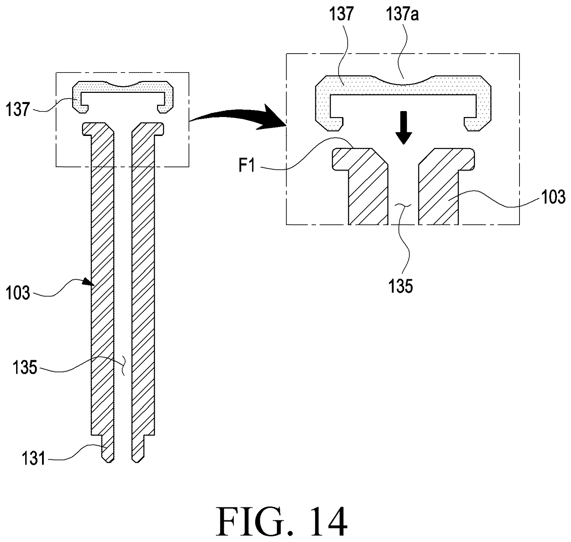

FIG. 14 is a view illustrating the guide tube of the repair kit of FIG. 1, according to an embodiment of the disclosure.

Referring further to FIG. 14, the repair kit 100 and/or the guide tube 103 may further include a cap 137 (or lid). The cap 137 may close at least a portion of the guide hole 135, for example, by being coupled to the first end face F1 of the guide tube 103. For example, by being coupled to the first end face F1, the cap 137 may suppress contamination of the interior of the guide tube 103 (e.g., the guide hole 135). In an embodiment, the cap 137 may include a marking or a guide recess 137a provided on the outer circumferential surface thereof at a position corresponding to the guide hole 135. The marking or the guide recess 137a may, for example, visually and/or tactilely inform the user of a position to be aligned with the tip 121 of the nozzle 102 when the guide tube 103 is coupled. For example, when the guide tube 103 is coupled, the tip 121 of the nozzle 102 may enter the guide hole 135 through the position at which the marking or the guide recess 137a is formed.

According to an embodiment, in a state in which the guide tube 103 is coupled, the cap 137 may suppress movement of the nozzle 102 relative to the guide tube 103. For example, a first outer diameter od1 at the first end face F1 may be greater than an outer diameter of the nozzle 102, in which case, the nozzle 102 may be movable at a position corresponding to the first end face F1. Here, the description "movement of the nozzle 102" may refer to, for example, movement of the nozzle 102 relative to the guide tube 103 in a direction intersecting the direction in which the nozzle 102 enters the guide hole 135 (or exits from the guide hole 135). The cap 137 may suppress movement of the nozzle 102 by supporting at least a portion of the nozzle 102 while being substantially fixed to the guide tube 103.

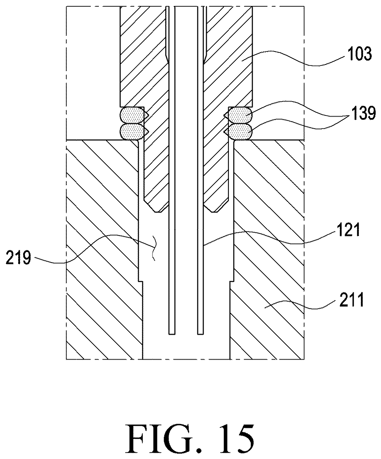

FIG. 15 is a view illustrating the guide tube in the repair kit of FIG. 1, according to an embodiment of the disclosure.

Referring to FIG. 15, the repair kit 100 and/or the guide tube 103 may further include at least one spacer ring 139. The spacer ring 139 may, for example, be coupled to the guide tube 103 in a state of enclosing the support end 131. In an embodiment, as the spacer ring 139 is coupled, the position or height indicated by "h" in FIG. 8 may be adjusted. For example, depending on the specifications of the electronic device 200 (e.g., the thickness or structure of the housing 201), one or more spacer rings 139 may be coupled or disposed to surround the support end 131, thereby adjusting the position at which the guide tube 103 and/or the tip 121 of the nozzle 102 is disposed within the injection hole 219.

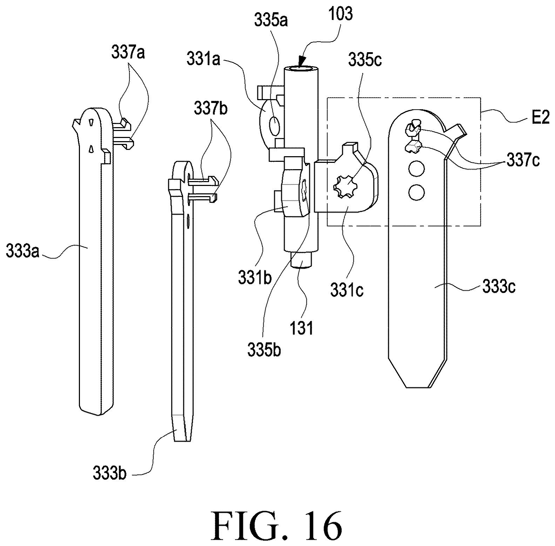

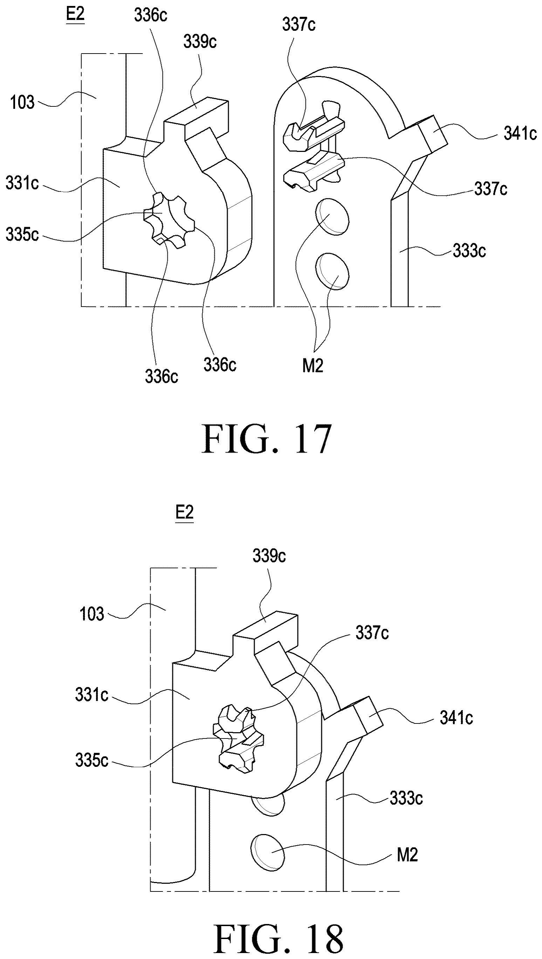

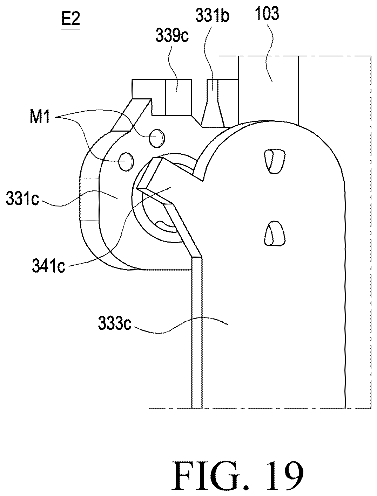

FIG. 16 is an exploded perspective view illustrating a guide tube of a repair kit according to an embodiment of the disclosure. FIG. 17 is a view illustrating a state in which support plates 333a, 333b, and 333c of the guide tube of FIG. 16 are being coupled to support pieces according to an embodiment of the disclosure, in which portion E2 of FIG. 16 is illustrated in an enlarged view. FIG. 18 is a view illustrating a state in which the support plates 333a, 333b, and 333c of the guide tube of FIG. 16 are coupled to the support pieces according to an embodiment of the disclosure, in which portion E2 of FIG. 16 is illustrated in an enlarged view. FIG. 19 is a view illustrating a state in which the support plates 333a, 333b, and 333c of the guide tube of FIG. 16 are being coupled to the support pieces, as viewed from another direction according to an embodiment of the disclosure, in which portion E2 of FIG. 16 is illustrated in an enlarged view.

Referring to FIGS. 16 to 19, the repair kit 100 and/or the guide tube 103 may further include one or more support pieces 331a, 331b, and 331c provided on the guide tube 103, and one or more support plates 333a, 333b, and 333c detachably provided to the support pieces 331a, 331b, and 331c. In an embodiment, the support plates 333a, 333b, and 333c may be coupled to the support pieces 331a, 331b, and 331c, respectively, in a state parallel to the guide tube 103 or in a state inclined with respect to the guide tube 103. In an embodiment, the support plates 333a, 333b, and 333c may be configured to adjust an alignment height or alignment angle of the guide tube 103 relative to the housing 201. For example, in a state in which the guide tube 103 is coupled to the housing 201, the support plates 333a, 333b, and 333c may be supported by a flat surface or structure around the injection hole 219, thereby suppressing movement of the guide tube 103 and maintaining the aligned state of the guide tube 103 relative to the housing 201.

According to an embodiment, the repair kit 100 and/or the guide tube 103 may include a plurality of (e.g., three) support pieces 331a, 331b, and 331c. For example, the plurality of support pieces 331a, 331b, and 331c may be arranged at an equal angular interval along the circumferential direction of the guide tube 103 and may extend from the outer circumferential surface of the guide tube 103. Depending on the user's needs, one or more support plates 333a, 333b, and 333c may be coupled to one of the support pieces 331a, 331b, and 331c, and may support the guide tube 103 while the sealing material 11 is injected into the injection hole 219.

According to an embodiment, the repair kit 100 and/or the guide tube 103 may include engaging holes 335a, 335b, and 335c formed through the support pieces 331a, 331b, and 331c, and one or more engaging protrusions 337a, 337b, and 337c (or engaging hooks) protruding from respective surfaces of the support plates 333a, 333b, and 333c. For example, the engaging protrusions 337a, 337b, and 337c may engage with the engaging holes 335a, 335b, and 335c to couple the support plates 333a, 333b, and 333c to the support pieces 331a, 331b, and 331c. In an embodiment, the support plates 333a, 333b, and 333c may be substantially fixed at predetermined angular positions, respectively, relative to the guide tube 103 in a state of being coupled to the support pieces 331a, 331b, and 331c. For example, fixing the support plates 333a, 333b, and 333c at predetermined angular positions may enable the aligned position or aligned direction of the guide tube 103 to be maintained more stably.

According to an embodiment, although reference numerals are not assigned, the repair kit 100 and/or the guide tube 103 may further include at least two pairs of engaging recesses 336c arranged along a circumferential direction on the inner walls of the engaging holes 335a, 335b, and 335c. When the at least two pairs of engaging recesses are provided, one pair of engaging protrusions 337a, 337b, and 337c may engage with one pair selected from the at least two pairs of engaging recesses. For example, in a state in which the engaging protrusions 337a, 337b, and 337c engage with the engaging recesses, the support plates 333a, 333b, and 333c may be substantially unable to rotate relative to the support pieces 331a, 331b, and 331c. In an embodiment, when the engaging protrusions 337a, 337b, and 337c engage with a first pair of the engaging recesses among the at least two pairs, the support plates 333a, 333b, and 333c may be disposed in parallel with the guide tube 103. In an embodiment, when the engaging protrusions 337a, 337b, and 337c engage with a second pair of the engaging recesses among the at least two pairs, the support plates 333a, 333b, and 333c may be disposed to be inclined by a predetermined angle with respect to the guide tube 103. The term "predetermined angle" may refer to an angle at which the second pair of engaging recesses are aligned relative to the first pair of engaging recesses. For example, when supporting the guide tube 103 using the support plates 333a, 333b, and 333c, the engaging recesses and/or the engaging protrusions 337a, 337b, and 337c may engage with each other so that the aligned position or aligned direction of the guide tube 103 may be maintained more stably.

According to an embodiment, the repair kit 100 and/or the guide tube 103 may further include one or more first markings M1 and one or more second markings M2 configured to guide a direction in which the support plates 333a, 333b, and 333c are coupled to the support pieces 331a, 331b, and 331c. The first markings M1 and the second markings M2 may be respectively provided on the support pieces 331a, 331b, and 331c and the support plates 333a, 333b, and 333c corresponding to each other in the same shape or same number. In an embodiment, the first markings M1 and the second markings M2 may be respectively provided on surfaces of the support pieces 331a, 331b, and 331c and the support plates 333a, 333b, and 333c that face each other when they are coupled. For example, when the repair kit 100 and/or the guide tube 103 includes the plurality of support pieces 331a, 331b, and 331c and the plurality of support plates 333a, 333b, and 333c, the first markings M1 and the second markings M2 may guide the user to recognize which support pieces 331a, 331b, and 331c correspond to which support plates 333a, 333b, and 333c, and/or the direction in which the support pieces 331a, 331b, and 331c and the support plates 333a, 333b, and 333c are to be coupled.

According to an embodiment, the repair kit 100 and/or the guide tube 103 may further include a first interference protrusion 339c protruding from the support pieces 331a, 331b, and 331c, and a second interference protrusion 341c protruding from the support plates 333a, 333b, and 333c. In an embodiment, similar to the first markings M1 and the second markings M2, the second interference protrusion 341c may guide the direction in which the support plates 333a, 333b, and 333c are to be coupled to the support pieces 331a, 331b, and 331c. For example, when the support plates 333a, 333b, and 333c are assembled to the support pieces 331a, 331b, and 331c in a direction other than a predetermined direction, the second interference protrusion 341c may interfere with another support piece 331a, 331b, or 331c or the guide tube 103 to substantially prevent coupling in an incorrect direction. In an embodiment, when the support plates 333a, 333b, and 333c are coupled to the support pieces 331a, 331b, and 331c in an inclined direction with respect to the guide tube 103, the second interference protrusion 341c may be adjacent to or in substantial contact with the first interference protrusion 339c. For example, the first interference protrusion 339c and the second interference protrusion 341c may guide the inclined angle of the support plates 333a, 333b, and 333c with respect to the guide tube 103. In an embodiment, when the second interference protrusion 341c comes into contact with the first interference protrusion 339c, an increase in the inclined angle of the support plates 333a, 333b, and 333c with respect to the guide tube 103 may be suppressed. For example, during an operation of injecting the sealing material 11, even when an external force (e.g., the external force EF of FIG. 8) is applied to the repair kit 100, the guide tube 103 may be supported by the support plates 333a, 333b, and 333c and maintain a stable fixed state.

In an embodiment, although reference numerals are not assigned, the engaging protrusions 337a, 337b, and 337c may further include recesses configured to engage with portions protruding inward from the inner walls of the engaging holes 335a, 335b, and 335c. For example, various structures may additionally be provided to maintain the inclined angle of the support plates 333a, 333b, and 333c relative to the guide tube 103. As such, one or more embodiments of the disclosure are not limited to the above-described configurations, and various modifications or additional embodiments may be implemented within the scope described in the claims or through optional combinations of the disclosed one or more embodiments.

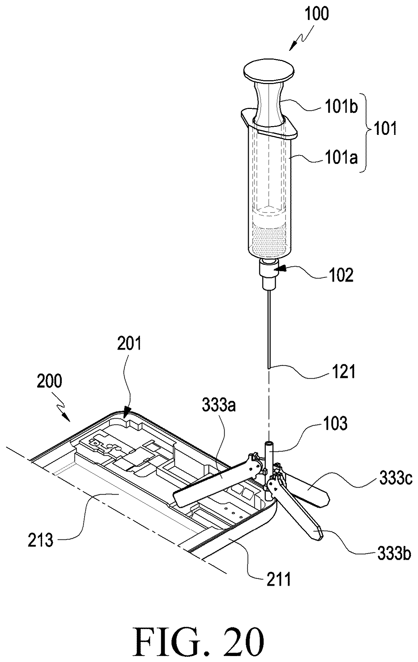

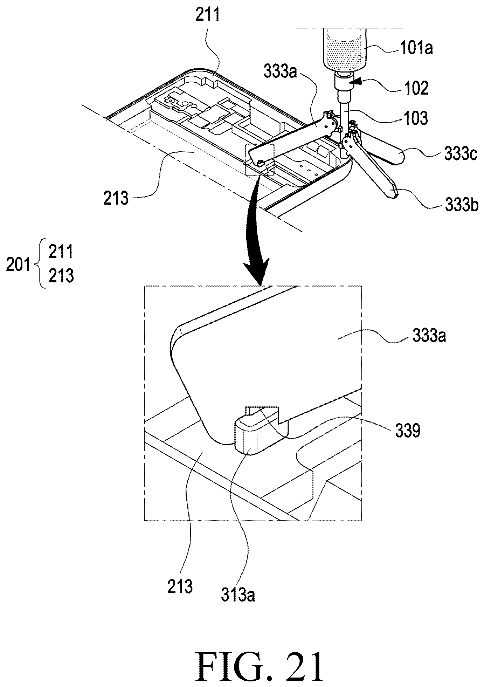

FIG. 20 is a perspective view illustrating a state in which a repair kit including the guide tube of FIG. 16 is being coupled to an electronic device, according to an embodiment of the disclosure. FIG. 21 is a perspective view illustrating a state in which the repair kit including the guide tube of FIG. 16 is coupled to the electronic device, according to an embodiment of the disclosure.

Referring further to FIGS. 20 and 21, in a state in which the support plates 333a, 333b, and 333c are inclinedly coupled to the guide tube 103, the support plates 333a, 333b, and 333c may be supported by a flat surface or a structure inside the housing 201 around the injection hole 219. The term "structure inside the housing 201" may refer to, for example, any structure such as a rib 313a for guiding the assembly positions of components or for fixing the components. When supported by a structure (e.g., the rib 313a) inside the housing 201, one or more support plates 333a, 333b, and 333c may further include a dummy recess 339. The dummy recess 339 may accommodate, for example, at least a portion of the rib 313a. For example, by inserting the support end 131 into the injection hole 219 and being supported by the support plates 333a, 333b, and 333c and/or the rib 313a, the guide tube 103 may be stably fixed to the housing 201.

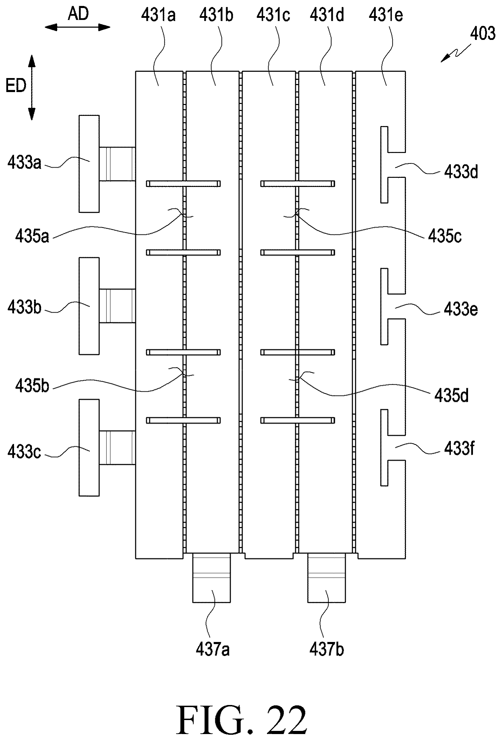

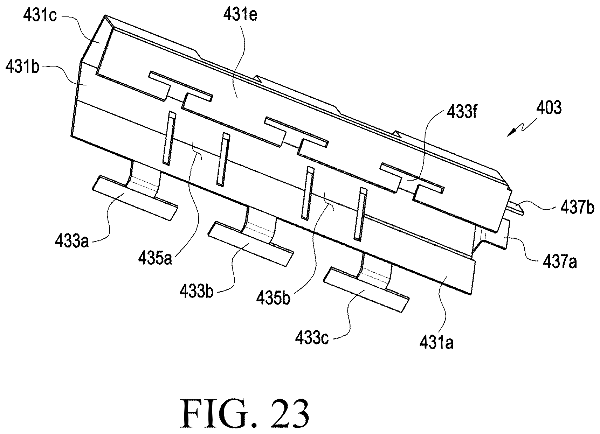

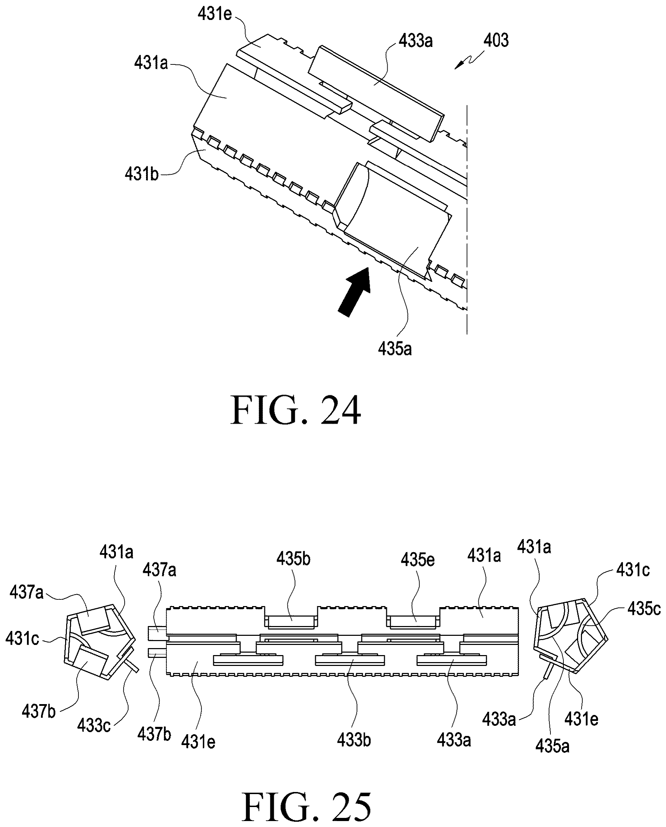

FIG. 22 is a view illustrating a state in which a guide tube of a repair kit according to an embodiment of the disclosure is unfolded. FIG. 23 is a perspective view illustrating a state in which engaging pieces of the guide tube of FIG. 22 are engaging with engaging holes according to an embodiment of the disclosure. FIG. 24 is a view illustrating a state in which a variable plate of the guide tube of FIG. 22 is being bent, according to an embodiment of the disclosure. FIG. 25 illustrates views obtained when the guide tube of FIG. 22 is viewed in three directions, according to an embodiment of the disclosure.

Referring to FIGS. 22 to 25, the repair kit 100 may further include a guide tube 403 that is provided in the form of a plate, which is transformed into a cylindrical shape according to the user's needs. For example, the guide tube 403 may be shaped into the form of a guide tube by the user cutting a packaging material of the repair kit 100. The plate prior to being shaped may extend in a longitudinal direction ED and may include a plurality of guide plates 431a, 431b, 431c, 431d, and 431e arranged in a direction (hereinafter referred to as an "arrangement direction AD") intersecting the longitudinal direction. For example, before being shaped into the form of the guide tube 403 or in the state of a packaging material, the guide plates 431a, 431b, 431c, 431d, and 431e may be arranged in a flat plate shape. In an embodiment, the guide plates 431a, 431b, 431c, 431d, and 431e may be circumferentially arranged by being inclinedly moved or deformed with respect to adjacent guide plates, and may be implemented into a cylindrical guide tube 403 by such movement or deformation. In the circumferentially arranged state, the guide plates 431a, 431b, 431c, 431d, and 431e may be arranged to at least partially enclose the nozzle 102, and may support a position or direction where the nozzle 102 is disposed on the housing 201. In an embodiment, cutting lines may be provided on the guide plates 431a, 431b, 431c, 431d, and 431e according to specifications of the electronic device 200, and when cutting the guide tube in a flat shape from the packaging material, the user may cut along the cutting lines corresponding to the user's electronic device 200. For example, the guide tube 403 of the embodiment may replace the spacer ring 139 of the preceding embodiment and may provide a plurality of cutting lines as a structure for determining or guiding the alignment position of the repair kit 100.

According to an embodiment, the repair kit 100 and/or the guide tube 403 may further include one or more engaging pieces 433a, 433b, and 433c and one or more engaging holes 433d, 433e, and 433f, thereby allowing the guide plates 431a, 431b, 431c, 431d, and 431e to maintain a circumferentially arranged state. For example, when the engaging pieces 433a, 433b, and 433c engage with the engaging holes 433d, 433e, and 433f, the guide tube 403 may be maintained in a cylindrical shape. In an embodiment, one or more engaging pieces 433a, 433b, and 433c may extend from a first guide plate 431a disposed at one end in an arrangement direction AD among the guide plates 431a, 431b, 431c, 431d, and 431e, and one or more guide holes 135 may be formed in an nth guide plate 431e (where "n" is a natural number) disposed at the other end in the arrangement direction AD among the guide plates 431a, 431b, 431c, 431d, and 431e. For example, when the engaging pieces 433a, 433b, and 433c engage with the engaging holes 433d, 433e, and 433f, the first guide plate 431a, 431b, 431c, 431d, 431e and the n^{th} guide plate 431a, 431b, 431c, 431d, 431e may be restrained while being positioned adjacent to each other. As a result, the guide plates 431a, 431b, 431c, 431d, and 431e may implement the cylindrical guide tube 403.

According to an embodiment, the repair kit 100 may include a plurality of variable plates 435a, 435b, 435c, and 435d formed across two adjacent guide plates 431a, 431b, 431c, 431d, and 431e among the guide plates 431a, 431b, 431c, 431d, and 431e. Although reference numerals are not assigned, the repair kit 100 may include slits formed across two adjacent guide plates 431a, 431b, 431c, 431d, and 431e, and a portion of the guide plate 431a, 431b, 431c, 431d, or 431e between the two adjacent slits may be implemented as one of the variable plates 435a, 435b, 435c, and 435d. In a state in which the guide plates 431a, 431b, 431c, 431d, and 431e are arranged in the circumferential direction, for example, in a state in which the cylindrical guide tube 403 is implemented, the variable plates 435a, 435b, 435c, and 435d may be deformed into curved shapes protruding inward of the guide tube 403. In an embodiment, the plurality of variable plates 435a, 435b, 435c, and 435d may be disposed at different positions in the circumferential direction and/or the longitudinal direction of the guide tube 403. In an embodiment, when the guide tube 403 is coupled to the nozzle 102, the plurality of variable plates 435a, 435b, 435c, and 435d may be brought into contact with or supported by the outer circumferential surface of the nozzle 102 at respective different positions. For example, by being supported by the variable plates 435a, 435b, 435c, and 435d, the guide tube 403 may be stably disposed or fixed on the nozzle 102.

According to an embodiment, the repair kit 100 or the guide tube 403 may further include a plurality of bent pieces 437a and 437b. In an embodiment, the bent pieces 437a and 437b may extend from one end of at least one of the plurality of guide plates 431a, 431b, 431c, 431d, and 431e, and may be bent in a direction toward the outer circumferential surface of the nozzle 102 when the guide tube 403 is mounted on the nozzle 102. In an embodiment, a portion of the bent pieces 437a and 437b that comes into contact with the outer circumferential surface of the nozzle 102 may at least partially come into contact with the inner circumferential surface of the injection hole 219 in the state in which the guide tube 403 is coupled to the housing 201. For example, the bent pieces 437a and 437b may be inserted into or disposed inside the injection hole 219, similarly to the support end 131 of the above-described embodiment.

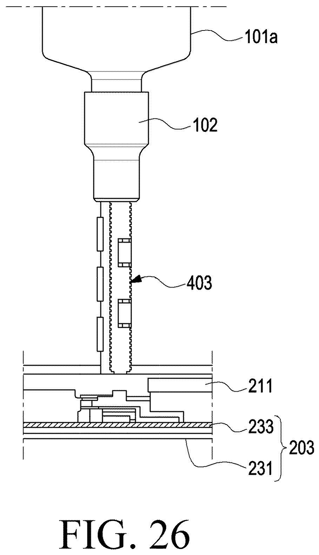

FIG. 26 is a perspective view illustrating a state in which a repair kit is coupled to an electronic device through the guide tube of FIG. 22, according to an embodiment of the disclosure.

Referring further to FIG. 26, the guide tube 403 may be coupled to the nozzle 102 in a state in which one or more variable plates 435a, 435b, 435c, and 435d and/or one or more bent pieces 437a and 437b are in contact with the outer circumferential surface of the nozzle 102. In an embodiment, the guide tube 403 may be coupled to the housing 201 in the state in which the bent pieces 437a and 437b are inserted into the injection hole 219, similarly to the support end 131 of the above-described embodiment. For example, the repair kit 100 may be coupled to the housing 201 using the guide tube 403, and in a state of being coupled to the housing 201, the sealing material 11 accommodated in the storage 101 may be discharged into the injection hole 219, thereby forming a waterproof/dustproof structure in a discontinuous area between adhesive members (e.g., the first adhesive member 235a and the second adhesive member 235b of FIG. 3) and/or between the housing 201 and the display 203.

As described above, the repair kit 100 according to one or more embodiments of the disclosure includes the guide tube 103 or 403, which allows the user to easily inject the sealing material 11 into a predetermined position or portion when the display 203 is repaired (e.g., self-repaired) or replaced (e.g., self-replaced). For example, the disclosed repair kit 100 may facilitate restoration of a waterproof/dustproof structure that may be degraded after repair. When the user directly injects the CIPG material, the guide tube 103 or 403 may maintain the position or orientation of the nozzle 102 in a stable manner, thereby enabling the restored waterproof/dustproof structure to provide substantially the same performance as the structure initially formed during manufacturing.

The effects capable of being obtained by the disclosure are not limited to those described above, and other effects not described above may be clearly understood by a person ordinarily skilled in the art to which the disclosure belongs from the descriptions of the above-described embodiments.

According to an embodiment of the disclosure, a repair kit (the repair kit 100 of FIG. 1 or FIG. 2) for an electronic device (e.g., the electronic device 200 of FIG. 3 or FIG. 4) may include a nozzle (e.g., the nozzle 102 of FIG. 1 or FIG. 2), a storage (e.g., the storage 101 of FIG. 1 or FIG. 2) configured to store a sealing material (e.g., the sealing material 11 of FIG. 1 or FIG. 2) in a liquid state or a gel state and to discharge the sealing material through the nozzle based on an external force, and a guide tube (e.g., the guide tube 103 or 403 of FIG. 1, FIG. 2, FIG. 16, or FIG. 25) detachably provided on the nozzle while receiving at least a portion of the nozzle and configured to align the nozzle to a predetermined position or in a predetermined direction. In an embodiment, when the guide tube is mounted to the nozzle, a tip (e.g., the tip 121 of FIG. 1 or FIG. 2) of the nozzle, from which the sealing material is discharged, may be configured to protrude from one end (hereinafter referred to as a "support end" (e.g., the support end 131 of FIG. 1 or FIG. 2) of the guide tube).

According to an embodiment, the storage may include a cylindrical storage container (e.g., the storage container 101a of FIG. 1 or FIG. 2) in which one end is open and the other end is coupled to the nozzle, the storage container being configured to provide at least a portion of a space in which the sealing material is accommodated, and a plunger (e.g., the plunger 101b of FIG. 1 or FIG. 2) at least partially accommodated in the storage container through the open end of the storage container. In an embodiment, the plunger may be configured to linearly move within the storage container by an external force so as to discharge the sealing material through the nozzle.

According to an embodiment, the repair kit may further include at least one vent recess (e.g., the vent recess 133 of FIG. 12) formed at least partially on an outer surface of the support end.

According to an embodiment, the support end may have an outer diameter smaller than that of the remaining portion of the guide tube.

According to an embodiment, the repair kit may further include at least one spacer ring (e.g., the spacer ring 139 of FIG. 15) coupled to enclose the support end.

According to an embodiment, the guide tube may provide a guide hole (e.g., the guide hole 135 of FIG. 12) extending from an end face (hereinafter referred to as a "first end face" (e.g., the first end face F1 of FIG. 12)), which is one end of the guide tube adjacent to the storage when the guide tube is mounted to the nozzle, to an end face (hereinafter referred to as a "second end face" (e.g., the second end face F2 of FIG. 12)), which is an end face facing the support end. In an embodiment, at least a portion of the nozzle may be configured to be accommodated in the guide hole.

According to an embodiment, the inner diameter of the guide hole may at least partially decrease toward the second end face.

According to an embodiment, the repair kit may further include a cap (e.g., the cap 137 of FIG. 14) detachably provided on the guide tube so as to face the first end face and configured to close the guide hole when coupled to the guide tube.

According to an embodiment, the repair kit may further include a guide recess (e.g., the guide recess 137a of FIG. 14) disposed at a position on an outer surface of the cap corresponding to the guide hole.

According to an embodiment, the repair kit may further include at least one support piece (e.g., the support pieces 331a, 331b, and 331c of FIGS. 16 to 19) provided on the guide tube, and at least one support plate (e.g., the support plates 333a, 333b, and 333c of FIGS. 16 to 19) detachably provided on the at least one support piece in a state parallel to the guide tube or in a state inclined with respect to the guide tube.

According to an embodiment, the at least one support plate may be configured to adjust an alignment height or alignment angle of the guide tube by being coupled to the at least one support piece in a state inclined with respect to the guide tube.

According to an embodiment, three support pieces may protrude from an outer circumferential surface of the guide tube and be arranged at an equal angular interval in a circumferential direction.

According to an embodiment, the repair kit may include at least one engaging hole (e.g., the engaging holes 335a, 335b, and 335c of FIGS. 16 to 19) formed through the at least one support piece, and at least one engaging protrusion (e.g., the engaging protrusions 337a, 337b, and 337c of FIGS. 16 to 19) protruding from one surface of the at least one support plate. In an embodiment, the at least one engaging protrusion may be configured to engage with the engaging hole so as to couple the at least one support plate to the at least one support piece.

According to an embodiment, the repair kit may further include at least two pairs of engaging recesses arranged in a circumferential direction on an inner wall of the engaging hole. In an embodiment, one pair of the engaging protrusions may be provided and configured to engage with a selected one pair of the at least two pairs of engaging recesses.

According to an embodiment, the repair kit may further include at least one first interference protrusion (e.g., the first interference protrusion 339c of FIGS. 17 to 19) protruding from the at least one support piece, and at least one second interference protrusion (e.g., the second interference protrusion 341c of FIGS. 17 to 19) protruding from the at least one support plate. In an embodiment, the at least one first interference protrusion and the at least one second interference protrusion may be configured to guide an inclination direction of the at least one support plate with respect to the guide tube when the at least one support plate is coupled to the at least one support piece.

According to an embodiment of the disclosure, a repair kit (e.g., the repair kit 100 of FIG. 1 or FIG. 2) for an electronic device (e.g., the electronic device 200 of FIG. 3 or FIG. 4) may include a nozzle (e.g., the nozzle 102 of FIG. 1 or FIG. 2), a storage (e.g., the storage 101 of FIG. 1 or FIG. 2) configured to store a sealing material (e.g., the sealing material 11 of FIG. 1 or FIG. 2) in a liquid state or a gel state and to discharge the sealing material through the nozzle based on an external force, a guide tube (e.g., the guide tube 103 or 403 of FIG. 1, FIG. 2, FIG. 16, or FIG. 25) detachably provided on the nozzle while accommodating at least a portion of the nozzle, the guide tube being configured to align the nozzle to a predetermined position or in a predetermined direction, and to cause a tip (e.g., the tip 121 of FIG. 1 or FIG. 2) of the nozzle, from which the sealing material is discharged, to protrude from one end of the guide tube (hereinafter referred to as a "support end" (e.g., the support end 131 of FIG. 1 or FIG. 2)), and at least one vent recess (e.g., the vent recess 133 of FIG. 12) formed at least partially on an outer surface of the support end. In an embodiment, the support end may have an outer diameter smaller than that of the remaining portion of the guide tube.

According to an embodiment, the repair kit may further include at least one spacer ring (e.g., the spacer ring 139 of FIG. 15) coupled to enclose the support end.

According to an embodiment, the guide tube may provide a guide hole (e.g., the guide hole 135 of FIG. 12) extending from an end face (hereinafter referred to as a "first end face" (e.g., the first end face F1 of FIG. 12)), which is one end of the guide tube adjacent to the storage when the guide tube is mounted to the nozzle, to an end face (hereinafter referred to as a "second end face" (e.g., the second end face F2 of FIG. 12)), which is an end face facing the support end. In an embodiment, at least a portion of the nozzle may be configured to be accommodated in the guide hole.

According to an embodiment, the inner diameter of the guide hole may at least partially decrease toward the second end face.

According to an embodiment, the repair kit may further include a cap (e.g., the cap 137 of FIG. 14) detachably provided on the guide tube so as to face the first end face and configured to close the guide hole when coupled to the guide tube, and a guide recess (e.g., the guide recess 137a of FIG. 14) disposed at a position on an outer surface of the cap corresponding to the guide hole.

According to an embodiment, the guide tube may include a plurality of guide plates (e.g., the guide plates 431a, 431b, 431c, 431d, and 431e of FIGS. 22 to 25) that extend in a longitudinal direction, are configured to be arranged in a flat shape or along a circumferential direction, and are configured to enclose the nozzle when arranged in the circumferential direction, and a plurality of variable plates (e.g., the variable plates 435a, 435b, 435c, and 435d of FIGS. 22 to 25) formed across two adjacent guide plates among the plurality of guide plates. In an embodiment, when the guide tube is mounted to the nozzle, the plurality of variable plates may be configured to protrude inward of the guide tube so as to be in contact with an outer surface of the nozzle at respective different positions in the longitudinal direction and the circumferential direction.

According to an embodiment, the guide tube may further include at least one engaging piece (e.g., the engaging pieces 433a, 433b, and 433c of FIGS. 22 to 25) extending from a guide plate disposed at one end in an arrangement direction among the plurality of guide plates, and at least one engaging hole (e.g., the engaging holes 433d, 433e, and 433f of FIGS. 22 to 25) formed in a guide plate disposed at the other end in the arrangement direction among the plurality of guide plates. In an embodiment, the at least one engaging piece may be configured to engage with the at least one engaging hole so as to maintain a state in which the plurality of guide plates are arranged in the circumferential direction.

According to an embodiment, the guide tube may further include a bent piece (e.g., the bent pieces 437a and 437b of FIGS. 22 to 25) provided on at least one of the plurality of guide plates. In an embodiment, the bent piece may extend from one end of at least one of the plurality of guide plates and may be bent to be in contact with an outer surface of the nozzle when the guide tube is mounted to the nozzle.

Although the disclosure has been described with reference to an embodiment as an example, it is to be understood that the embodiment is intended to be exemplary and is not limiting the disclosure. It will be apparent to those skilled in the art that various changes in form and detail may be made without departing from the overall scope of the disclosure, including the appended claims and their equivalents.

## Claims

1. A repair kit (100) for an electronic device (200), the repair kit comprising:
a nozzle (102);
a storage (101) configured to store a sealing material (11) in a liquid state or a gel state and to discharge the sealing material through the nozzle based on an external force; and
a guide tube (103; 403) detachably provided on the nozzle while accommodating at least a portion of the nozzle, the guide tube being configured to align the nozzle to a predetermined position or in a predetermined direction,
wherein, when the guide tube is mounted to the nozzle, a tip (121) of the nozzle, from which the sealing material is discharged, is configured to protrude from a support end (131), which is one end of the guide tube.

2. The repair kit of claim 1, wherein the storage comprises:
a cylindrical storage container (101a), in which one end is open and a remaining end is coupled to the nozzle, the storage container being configured to provide at least a portion of a space in which the sealing material is accommodated; and
a plunger (101b) at least partially accommodated in the storage container through the open end of the storage container, and
wherein the plunger is configured to linearly move within the storage container by an external force so as to discharge the sealing material through the nozzle.

3. The repair kit of any one of claims 1 and 2, further comprising:
at least one vent recess (133) formed at least partially on an outer surface of the support end.

4. The repair kit of any one of claims 1 to 3, wherein the support end has an outer diameter smaller than that of a remaining portion of the guide tube.

5. The repair kit of claim 4, further comprising:
at least one spacer ring (139) coupled to surround the support end.

6. The repair kit of any one of claims 1 to 5, wherein the guide tube provides a guide hole (135) extending from an end face (hereinafter referred to as a "first end face (F1)), which is one end of the guide tube adjacent to the storage when the guide tube is mounted to the nozzle, to an end face (hereinafter referred to as a "second end face (F2)), which is an end face facing the support end, and
wherein at least a portion of the nozzle is configured to be accommodated in the guide hole.

7. The repair kit of claim 6, wherein an inner diameter of the guide hole at least partially decreases toward the second end face.

8. The repair kit of any one of claims 6 and 7, further comprising:
a cap (137) detachably provided on the guide tube so as to face the first end face, the cap being configured to close the guide hole by being coupled to the guide tube.

9. The repair kit of claim 8, further comprising:
a guide recess (137a) disposed at a position on an outer surface of the cap corresponding to the guide hole.

10. The repair kit of any one of claims 1 to 9, further comprising:
at least one support piece (331a, 331b, 331c) provided on the guide tube; and
at least one support plate (333a, 333b, 333c) detachably provided on the at least one support piece in a state parallel to the guide tube or in a state inclined with respect to the guide tube.

11. The repair kit of claim 10, wherein the at least one support plate is configured to adjust an alignment height or alignment angle of the guide tube by being coupled to the at least one support piece in a state inclined with respect to the guide tube.

12. The repair kit of any one of claims 10 and 11, wherein three support pieces protrude from an outer circumferential surface of the guide tube and arranged at an equal angular interval in a circumferential direction.

13. The repair kit of any one of claims 10 to 12, further comprising:
at least one engaging hole (335a, 335b, 335c) formed through the at least one support piece; and
at least one engaging protrusion (337a, 337b, 337c) protruding from one surface of the at least one support plate,
wherein the at least one engaging protrusion is configured to engage with the engaging hole so as to couple the at least one support plate to the at least one support piece.

14. The repair kit of claim 13, further comprising:
at least two pairs of engaging recesses arranged in a circumferential direction on an inner wall of the engaging hole,
wherein one pair of engaging protrusions is provided and configured to engage with a selected one pair of the at least two pairs of engaging recesses.

15. The repair kit of any one of claims 10 to 14, further comprising:
at least one first interference protrusion (339c) protruding from the at least one support piece; and
at least one second interference protrusion (341c) protruding from the at least one support plate,
wherein the at least one first interference protrusion and the at least one second interference protrusion are configured to guide an inclination direction of the at least one support plate with respect to the guide tube when the at least one support plate is coupled to the at least one support piece.
